# EUROPEAN PATENT APPLICATION

(11) **EP 4 603 180 A1**
(43) Date of publication of application: **20.08.2025**
(21) Application number: 24193807.5
(22) Date of filing: 09.08.2024
(51) Int. Cl.: B01J 19/00

(54) **TECHNIQUES FOR SYNTHESIZING A MACROMOLECULE FROM A SAMPLE**

(30) Priority: 15.02.2024 US 202463554066 P
(71) Applicant: Roche Diagnostics International AG, 6343 Rotkreuz (CH); Roche Sequencing Solutions, Inc., Pleasanton, CA 94588 (US)
(72) Inventor: Wietzorrek, Joachim, 6343 Rotkreuz ZG (CH); Aghababazadeh, Majid, Pleasanton, California 94588 (US); Woolworth Leadbetter, Joanne, Pleasanton, California 94588 (US); Lehmann, Taylor, Pleasanton, California 94588 (US); McRuer, Robert N., Pleasanton, California 94588 (US); Miller, Scott Allan, Pleasanton, California 94588 (US); Pacaba, Donald Dwight Paalan, Pleasanton, California 94588 (US)
(74) Representative: Peterreins Schley

(57) **Abstract**

An aspect of the present disclosure relates to a system for synthesizing a macromolecule from a sample. The system comprises a mount configured to receive at least one receptacle. The at least one receptacle is configured to receive a sample. The system further comprises a UV radiation source configured to emit UV radiation, an illumination optics assembly configured to guide the UV radiation to the at least one receptacle and a controller configured to control the operation of the UV radiation source to cleave macromolecules in the at least one receptacle in a process of synthesizing the macromolecule from a sample.

## Description

### Technical Field

The techniques of the present disclosure relate to nucleotide sequencing. Particularly, the techniques of the present disclosure relate to illumination techniques used in synthesizing a macromolecule from a sample, where the macromolecule is subsequently employed in a nucleotide sequencing technique.

### Background

Nucleotide sequencing plays an ever-increasing role in different contexts. There is a high incentive to provide techniques for improving speed and cost of the sequencing operations. A promising route to achieve this goal are techniques employing membranes having a pore sized in the order of one nanometer in internal diameter ("nanopore)". When an electric potential is applied across a nanopore immersed in a conducting fluid, an ion current attributed to the conduction of ions across the nanopore can exist. The magnitude of the current is sensitive to the pore size and the type of molecule in the nanopore. A voltage or other signal in a circuit including the nanopore can be measured (e.g., at an integrating capacitor) as a way of measuring the resistance of the molecule, thereby allowing detection of which molecule is in the nanopore.

One advantageous method of nanopore sequencing involves the use of a specialized surrogate macromolecule from a nucleic acid template using a modified polymerase and modified nucleotides, as further described in U.S. Patent No. 7,939,259 Kokoris et al. and International Patent Publication No. WO2020/236526A1 O'Connell et al.. The surrogate macromolecule (also referred to herein as a "Xpandomer") is formed by template directed synthesis that preserves the original genetic information of the target nucleic acid, while also increasing linear separation of the individual elements of the sequence data. The surrogate macromolecules can be formed from a template nucleic acid molecule and can include multiple units, which each include a reporter code portion or portions. The reporter codes correspond to the different nucleotides (e.g., A, T, C, G). These reporter codes generate different electrical signals in the nanopore and therefore allow identification of the nucleotide sequence.

There is therefore a need to efficiently synthesize these specialized surrogate macromolecules for subsequent nucleotide sequencing.

### Summary

A first aspect of the present disclosure relates to a system for synthesizing a macromolecule from a sample. The system comprises a mount configured to receive at least one receptacle. The at least one receptacle is configured to receive a sample. The system further comprises a UV radiation source configured to emit UV radiation, an illumination optics assembly configured to guide the UV radiation to the at least one receptacle and a controller configured to control the operation of the UV radiation source to cleave macromolecules in the at least one receptacle in a process of synthesizing the macromolecule from a sample.

A second aspect of the present disclosure relates to a method for synthesizing a macromolecule from a sample. The method comprises providing UV radiation to a macromolecule bound to a surface of a receptacle to cleave the macromolecule from the receptacle. The UV radiation is provided using an illumination optics assembly configured to guide the UV radiation from a UV radiation source to the receptacle in a process of synthesizing the macromolecule from a sample.

The system and method of the first and second aspect can have the following advantages in some examples.

First, using an illumination optics assembly configured to guide the UV radiation to the at least one receptacle can improve the homogeneity of the applied UV radiation. In some known examples, UV radiation is applied by a UV illumination system as used for curing purposes (e.g., as employed in printing systems). In these systems, a multiplicity of UV LEDs is arranged in a pattern on a surface in close proximity to the receptacle to be illuminated. In addition, the UV LEDs are moved over the receptacle to directly illuminate the receptacle including the sample. This arrangement can have one or more disadvantages. For instance, a uniformity of the illumination can be sub-ideal. In particular, around the edges of the illumination area an illumination intensity can be lower than in the center. In addition, the panning movement of the UV LEDs can cause inhomogeneities. The illumination optics assembly of the present disclosure can be designed to guide UV radiation to the entire illumination area (e.g., a flow cell) homogeneously. For instance, the illumination optics assembly can include a mixing element (e.g., in the form of a mixing rod) to increase the spatial homogeneity of UV radiation emitted by the UV radiation source. This more homogenous radiation can then be imaged onto the receptacle.

Second, by using the illumination optics assembly configured to guide the UV radiation to the at least one receptacle, an amount of light arriving at the sample can be increased compared to an amount of light arriving elsewhere in the system (which is lost and might even be harmful for other components of the system). In the known solution described above a considerable amount of light is wasted. This amount would be even higher in case of an enlarged surface including UV LEDs if one chose to address the inhomogeneity issue discussed above by this measure. In some examples of the present disclosure a considerable fraction of the UV radiation emitted by the UV radiation source is coupled into the illumination optics assembly and guided (e.g., imaged) onto the receptacle.

Third, a moving UV radiation source and the related more complex design including moving parts of the known solution can be avoided in same examples. As explained above, moving the UV radiation source over the illumination area can also cause inhomogeneities in the illumination.

The terms "UV radiation" and "UV light" (sometimes abbreviated as "radiation" and "light", respectively), refer to any radiation having a wavelength of 480 nm or shorter (and, optionally, 200 nm and longer. In particular, "UV radiation" and "UV light" can be radiation having a wavelength between 200 nm and 400 nm. Therefore, "UV radiation" and "UV light" can include, in some examples, radiation at wavelengths falling within the visible spectrum according to certain definitions. Moreover, UV light (or light in short) can also include radiation falling within the non-visible spectrum according to certain definitions.

The terms "downstream" and "upstream" refer to directions in the general direction of propagation of UV radiation through the illumination optics assembly or against the general direction of propagation of UV radiation through the illumination optics assembly of the present disclosure when following the direction of propagation from the source of UV radiation to the receptacle (the synthesized macromolecules).

The term "sample" refers to any biological material that is derived, directly or indirectly, from a patient. A sample may be processed to remove contaminants or other materials that might interfere with a desired diagnostic assay and/or to prepare biological material in the sample for analysis. In this regard, a sample may be subjected to one or more processing steps and the term can be used to refer to material at different stages of a sample processing pipeline. Therefore, a sample can refer to an input and an output of a processing step alike. In particular, both an input and output of a step of synthesizing a macromolecule is referred to as sample (e.g., a target nucleotide sequence as well as a synthesized macromolecule encoding the nucleotide sequence information of the target nucleotide sequence can be a sample). A sample can be analyzed to determine one or more of its properties (e.g., a sequence of constituents of a synthesized macromolecule encoding a nucleotide sequence).

A "macromolecule" can be a molecule including more than 1.000 atoms (e.g., more than 5.000 atoms).

### Description of the Drawings

**FIG. 1** schematically shows an example system for synthesizing a macromolecule from a sample according to the present disclosure.
**FIG. 2** schematically shows an example system for nucleotide sequencing according to the present disclosure (including one or more systems for synthesizing a macromolecule from a sample according to the present disclosure).
**Fig. 3a** shows an example illumination optics assembly according to the present disclosure.
**Fig. 3b** is an enlarged view of a UV radiation source, a mixing component and a field stop of the example illumination optics assembly of **FIG. 3a****.**
**Fig. 4** illustrates a beam propagation of UV radiation in an example illumination optics assembly according to the present disclosure.
**Fig. 5** illustrates a beam propagation of UV radiation in another example illumination optics assembly according to the present disclosure.
**Fig. 6** shows an example field stop including an opening for a reference channel according to the present disclosure.
**Fig. 7a** illustrates the synthesizing steps of an example of synthesizing macromolecules according the present disclosure.
**Fig. 7b** is an example flow cell of the present disclosure.
**Fig. 8** shows components of surrogate polymers according to the present disclosure.

### Detailed Description

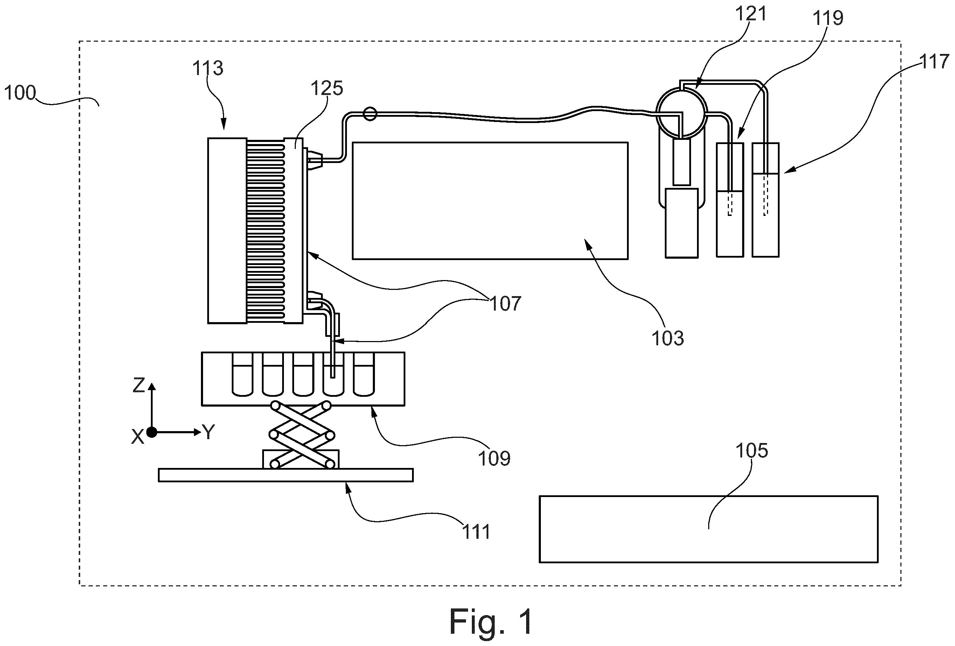

**FIG. 1** schematically shows an example system for synthesizing a macromolecule 100 from a sample according to the present disclosure.

The system for synthesizing a macromolecule from a sample 100 comprises a mount 125 configured to receive at least one receptacle 107 configured to receive a sample. The mount 125 can have a shape and/or surface features corresponding to the shape and/or surface features of the receptacle 107 (e.g., a flow cell). In general, the sample is in the liquid phase. In some examples, the receptacle 107 is a flow cell including one or more flow channels. In other examples, the receptacle 107 can include any other vessel for holding a sample in the liquid phase. In some examples, the sample can include a specimen (e.g., a nucleotide sample including a nucleotide sequence, e.g., a DNA sample or an RNA sample) which should be sequenced. In the system for synthesizing a macromolecule from a sample 100, a macromolecule is synthesized carrying the same information as the nucleotide sample as the sample for further processing (e.g., encoding a nucleotide sequence of a nucleotide sample). For instance, the synthesized macromolecule can be a surrogate macromolecule as described in the present disclosure (also referred to herein as an "Xpandomer" in the present disclosure). Further aspects of the synthesis of the macromolecule are given above and below.

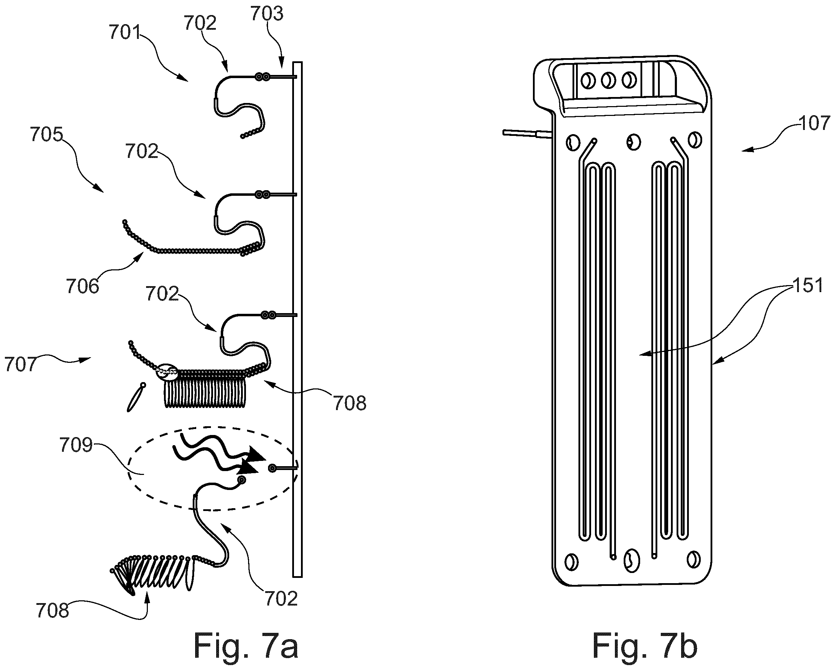

The system for synthesizing a macromolecule from a sample 100 can include the at least one receptacle 107 (e.g., a flow cell including one or more flow channels) configured to receive a sample in some examples. An example flow cell 107 is shown in Fig. 7b below.

The system for synthesizing a macromolecule from a sample 100 further includes a UV radiation source (not shown in Fig. 1) configured to emit UV radiation. The UV radiation source includes one or more LEDs configured to emit the UV radiation in some examples. In other examples, different UV radiation sources (e.g., gas discharge lamps or other UV radiation sources) can be employed.

The system for synthesizing a macromolecule from a sample 100 further includes an illumination optics assembly 103 configured to guide the UV radiation to the at least one receptacle. For example, the illumination optics assembly 103 can be configured to image a light source (e.g., a secondary light source generated by processing UV radiation emitted by the UV radiation source) onto the receptacle 107 (e.g., a flow cell). An illumination area of the illumination optics assembly 103 can correspond to an outline of the receptacle (e.g., the flow cell). For instance, the illumination area of the illumination optics assembly 103 can correspond to an area inscribing all flow channels of a flow cell. In other examples, the illumination optics assembly 103 can include multiple sub-areas corresponding to portions of the receptacle 107 (e.g., flow channels of a flow cell). An illumination area of the illumination optics assembly 103 can be larger than 1 cm by 2 cm in some examples (e.g., larger than 1 cm by 3 cm).

In other words, the illumination optics assembly 103 is configured in a critical illumination setup. In alternative examples, the illumination optics assembly 103 can be configured as a Köhler illumination setup (which might be more complex than a critical illumination setup, however). Further aspects of the illumination optics assembly 103 will be discussed below. In general, the illumination optics assembly 103 can include one or more components to increase the spatial homogeneity of the UV illumination onto the receptacle and/or increase an amount of UV radiation reaching the receptacle compared to a situation without the illumination optics assembly 103.

The system for synthesizing a macromolecule from a sample 100 further includes a controller 105 configured to control the operation of the UV radiation source to cleave macromolecules in the at least one receptacle in a process of synthesizing the macromolecule from a sample (i.e., to release the synthesized macromolecules from a binding site of the receptacle). For instance, the controller can be configured to set one or more of an illumination intensity according to a predetermined profile and an illumination duration in a process of synthesizing the macromolecule from a sample. For instance, the controller 105 can be configured to deliver UV radiation with a particular illumination intensity for a predetermined duration to cleave cleavable linkers (photocleavable linkers) of capture probes that are configured to bind the macromolecules to a surface of the receptacle (e.g., a surface of a channel of a flow cell, e.g., walls of flow channels of a flow cell). The controller 105 can be configured to deliver the UV radiation with a particular illumination intensity for a predetermined duration repeatedly in a process of synthesizing the macromolecules.

Further components of the system for synthesizing a macromolecule from a sample 100 will be discussed below. The controller 105 can be configured to control one or more of these further components in addition to the operation of the UV radiation source in some examples in the process of synthesizing the macromolecule from a sample.

The controller 105 can be configured to control the operation of the UV radiation source (and optionally the further components of the system for synthesizing a macromolecule from a sample 100 discussed below) automatically in some examples (e.g., without operator input except for starting the process).

The system for synthesizing a macromolecule 100 can be devoid of any imaging device configured to image the receptacle. In other words, the illumination optics assembly 103 guides UV radiation to the receptacle, but no light emanating from the receptacle is detected.

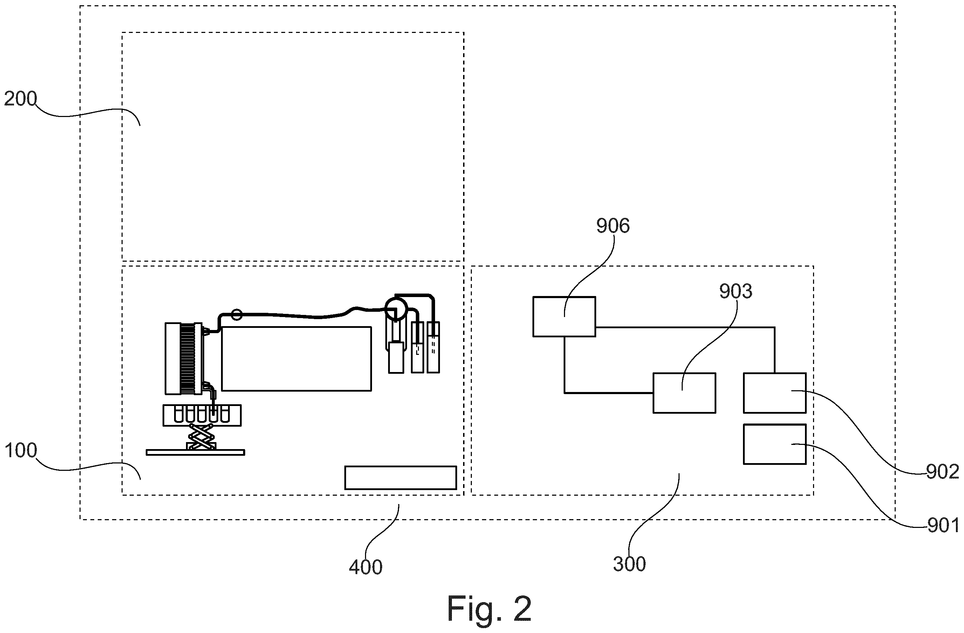

FIG. 2 schematically shows an example system for nucleotide sequencing 400 according to the present disclosure (including one or more systems for synthesizing a macromolecule from a sample 100 according to the present disclosure).

In some examples, the system for nucleotide sequencing 400 includes at least one sequencing module 300 which is configured to receive the macromolecules synthesized by the one or more systems for synthesizing a macromolecule from a sample 100. For instance, the one or more systems for synthesizing a macromolecule from a sample 100 can be coupled with the system for nucleotide sequencing 400 by a sample transport system (not shown in **Fig.** 2). The sample transport system can be configured to automatically transport vessels including synthesized macromolecules from the systems for synthesizing a macromolecule from a sample 100 to the system for nucleotide sequencing 400 (optionally through one or more further modules). In other examples, the macromolecules synthesized by the one or more systems for synthesizing a macromolecule from a sample 100 can be at least partially manually transported to the at least one sequencing module 300.

The at least one sequencing module 300 can be configured to determine a nucleotide sequence in the sample based on the synthesized macromolecules. For instance, the at least one sequencing module 300 can include one or more assay devices including membranes with pores (e.g., nanopores). The at least one sequencing module 300 can be configured to transport the synthesized macromolecules through the pores of the membrane and measure a property of the pore (e.g., an electrical property across the pore, such as a voltage across the pore) to determine a property of the synthesized macromolecule. The property can be in turn used to determine a nucleotide of the sample corresponding to the synthesized macromolecule. Further aspects of the sequencing technique using porous membranes (e.g., nanopores) that can be employed in the at least one sequencing module 300 and the possible configurations of the at least one sequencing module 300 are described above and below.

In some examples, the system for nucleotide sequencing 400 can include one or more preprocessing modules 200 configured to carry out one or more preparation steps to produce a sample to be consumed by the one or more systems for synthesizing a macromolecule from a sample 100. For instance, the sample can be generated from a patient sample by the one or more preparation steps.

The system for nucleotide sequencing 400 can include a control unit (not shown in Fig. 2) configured to control the operations of some or all of the modules included in the system for nucleotide sequencing 400. In some examples, the control unit can include the controller 105 of the one or more systems for synthesizing a macromolecule from a sample 100 described above.

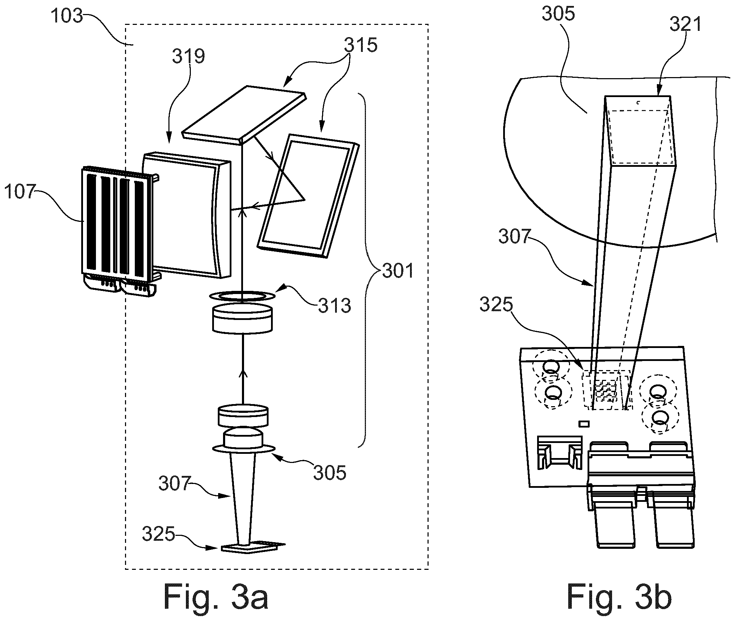

Aspects of the illumination optics assembly will be discussed next. **Fig. 3a** shows an example illumination optics assembly 103 according to the present disclosure. **Fig. 3b** is an enlarged view of a UV radiation source 325, a mixing component 307 and a field stop 305 of the example illumination optics assembly 103 of **FIG. 3a****.**

In some examples, the illumination optics assembly 103 comprises a mixing component 307 configured to mix the emitted UV radiation. Mixing the UV radiation can include increasing a spatial homogeneity of the UV radiation (i.e., a homogeneity at different locations of the illumination area). In other words, a spatial homogeneity of the UV radiation emitted from the UV radiation source 325 is smaller than a spatial homogeneity of the UV radiation output by the mixing component 307. For instance, a lowest illumination intensity over the output of the mixing rod 307 can be at most 12 % lower than a highest illumination intensity.

In some examples, the mixing component 307 can be a mixing rod. The mixing component 307 can form a tube that guides the UV light received at its input via reflection at its surfaces (e.g., total internal reflection). In this manner, a spatial homogeneity of the UV radiation can be increased while the UV light travels along the tube (and undergoes multiple reflections in average). In other examples (or in addition), the mixing component 307 can employ scatters to mix the UV light radiated by the UV light source.

In some examples, the mixing component 307 can have a tapered shape (e.g., a cross-section can increase between an input and an output of the mixing component 307). In some examples, a numerical aperture at an input of the mixing component 307 (e.g., having a tapered shape, e.g., a mixing rod) can be larger than a numerical aperture at an output if the mixing component 307 (e.g., a result of a tapered shape of the mixing component 307). This can increase the efficiency of imaging optics receiving the mixed UV radiation, which can have limited numerical aperture.

In some examples, an output of the mixing component 307 is configured to serve as a secondary light source generating an input for the downstream components of the illumination optics assembly 103. For instance, the output of the mixing component 307 can imaged onto the receptacle by the illumination optics assembly 103. The output of the mixing component 307 can be an output facet 321 or surface of the mixing component 307 (e.g., a planar output facet 321 or surface of the mixing component 307).

In some examples, the illumination optics assembly 103 includes imaging optics 301 configured to image UV radiation onto the at least one receptacle (e.g., a flow cell including one or more flow channels). In some examples, the imaging optics 301 can be configured to image an output (e.g., an output facet 321) of the mixing component 307 onto the at least one receptacle 107 (e.g., e.g., a flow cell including one or more flow channels). As described above, the imaging optics 301 can be configured with a critical illumination setup (i.e., a light source, e.g., a secondary light source imaged onto the specimen position which can be the receptacle). In some examples, the imaging optics 301 includes a plurality of transmissive optical components (e.g., lenses).

In some examples, an exit of the mixing component 307 can have the same aspect ratio as the illumination area (at the receptacle 107). In these examples, the imaging optics 301 can have a suitable magnification to illuminate an illumination area having the same aspect ratio (i.e., the aspect ratio is maintained by the imaging optics 301).

In some examples, the illumination optics assembly 103 further comprises a field stop 305 arranged between the mixing component 307 and the imaging optics 301. The field stop 305 can be shaped to define a field of the UV radiation entering the imaging optics 301. In some examples, the field stop 305 is arranged over an output of the mixing component 307. For instance, the field stop 305 can be arranged less than 5 mm away from the output of the mixing component 307 (e.g., as measured along a propagation direction of a central ray of the mixing component 307). In other examples, the field stop 305 can be arranged less than 3 mm away from the output of the mixing component 307 (e.g., as measured along a propagation direction of a central ray of the mixing component 307). In addition or alternatively, the field stop 305 can be arranged spaced apart from the output of the mixing component 307 (e.g., as measured along a propagation direction of a central ray of the mixing component 307). For instance, the field stop 305 can be arranged spaced apart by at least 0.5 mm (e.g., e.g., at least 1 mm) from the output of the mixing component 307 (e.g., as measured along a propagation direction of a central ray of the mixing component 307). In other words, there can be a gap between the output of the mixing component and the field stop 305. This can be advantageous in some examples as the field stop itself may be located in an ideal position for generating a focused image of the field stop on the receptacle. The exit of the mixing rod is blurred. This blurring can reduce the contrast of any surface imperfections of the exit facet (e.g., scratches, digs or dust).

In still other examples, the field stop 305 can contact an output facet 321 of the mixing component 307 (e.g., as measured along a propagation direction of a central ray of the mixing component 307).

The field stop 305 can include a flat sheet with an opening that defines the field (e.g., a cut-out in a sheet material such as sheet metal). In the example of **Fig. 3a** and **Fig. 3b****,** that opening has a rectangular shape. In some examples, the field stop 305 (e.g., its opening) defines a shape and size of the illuminated area on the receptacle (e.g., the flow cell). In the example of **Fig. 3a** and **Fig. 3b****,** this area also has a rectangular shape. In other examples, the field stop can define a differently shaped area (e.g., a circular area). In some examples, the field stop 305 is located at an intermediate image plane optically conjugated to the image plane of the illumination optics assembly 103 on the receptacle 107. In some examples, the field stop 305 can include multiple openings (e.g., corresponding to multiple disconnected areas to be illuminated at the receptacle, e.g., different flow channels of a flow cell).

In some examples, the illumination optics assembly 103 further comprises an aperture stop 313 arranged between the imaging optics 301 and the mount (e.g., at a focal plane of a field lens of the imaging optics 301). Other positions of the aperture stop are possible in other examples. The aperture stop 313 can be positioned to define the angular range from which the illumination optics assembly 103 (and particularly the imaging optics 301 can receive UV radiation. The aperture stop 313 include can include a flat sheet with an opening (e.g., a cut-out in a sheet material such as sheet metal).

In some examples, the illumination optics assembly 103 further comprises one or more folding mirrors 315 to fold a beam path of the UV radiation one or more times. This can make the illumination optics assembly 103 more compact.

In some examples, the imaging optics 301 is configured to be telecentric at its input and/or its output. In other words, the chief rays of UV radiation entering and exiting the imaging optics 301 are parallel. In other words, a magnification on the input/output is independent from a distance to the first/last component of the illumination optics assembly 103. Telecentricity at the input can improve a coupling of UV radiation into the imaging optics 301. Telecentricity at the output can be advantageous in situations where the receptacle has a considerable depth and/or is at least partially covered by other elements. The telecentricity can avoid shadowing and resulting loss of radiation (e.g., vignetting) which can in turn reduce illumination homogeneity. Moreover, providing telecentricity can mean that the magnification is substantially independent from a focus error. Even when the receptacle to be illuminated is not (perfectly) in focus, this does not result in a change in size of the illumination area (it can merely be blurred).

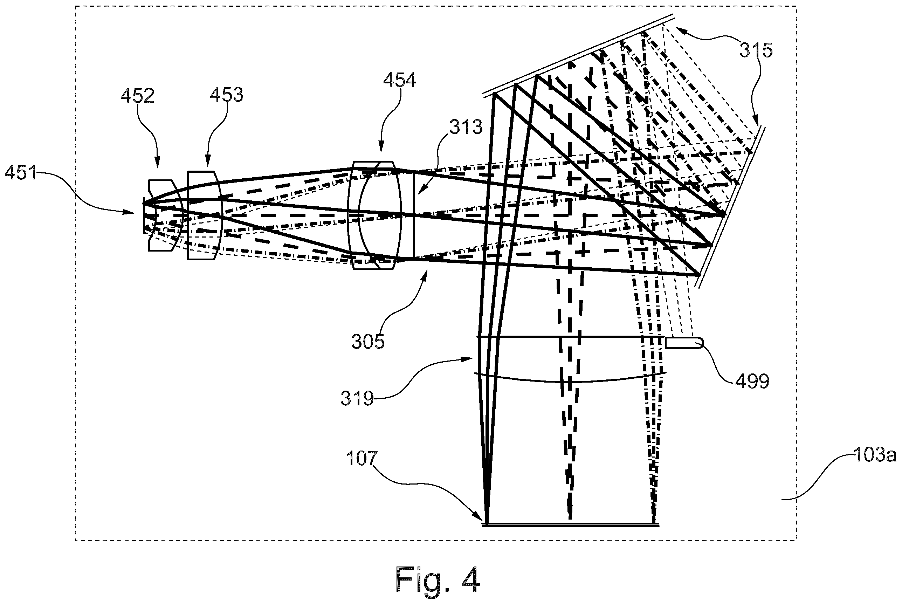

The illumination optics assembly 103 can further comprise a field lens 319. The field lens 319 can be configured to only provide a smaller (e.g., much smaller) contribution to the image formation compared to the other optical components (e.g., lenses) of the imaging optics 301. The field lens 319 can provide for (in combination with the aperture stop 313) telecentricity at the output of the imaging optics 301. **Fig.** 4 illustrates a beam propagation of UV radiation in an example illumination optics assembly 103a according to the present disclosure.

Fig. 4 shows an arrangement similar to Fig. 3a. Fig. 4 does not show a mixing component. However, a mixing component can be present and an UV radiation emitting plane 451 can be an output (e.g., an output facet) of a mixing component or an opening of field stop (e.g., as described above). In other examples, the illumination optics assembly 103a (and the illumination optics assemblies herein in general) might not have a mixing component. For instance, the UV radiation emitting plane 451 could be a UV radiation source (e.g., an UV radiation source having a high spatial homogeneity). In this situation, the spatial homogeneity of the UV illumination at the receptacle might be lower than in some situations when using a mixing component. However, using an illumination optics assembly (e.g., including imaging optics 301) might still be advantageous over systems using no illumination optics assembly as, e.g., an efficiency gain might be realized.

Fig. 4 illustrates how the illumination optics assembly 103a guides light from the UV radiation emitting plane 451 to the receptacle 107. As can be seen, both the input and the output of the imaging optics 301 are telecentric and the chief rays are parallel. In addition, the chief rays are parallel to the optical axis (not shown in **Fig. 4****)** of the illumination optics assembly 103a.

**Fig. 4** also depicts potential configurations of the imaging optics 301. The imaging optics 301 can include a plurality of transmissive optical components. The imaging optics 301 can be corrected for both chromatic and spherical aberration. For instance, the imaging optics 301 can include a plurality of lens elements 452, 453, 454, 319. The lens elements 452, 453, 454, 319 can be spherical lens elements. The lens elements can be made from a suitable material to transmit UV radiation (e.g., an i-line glass, fused silica or another suitable material). In the example of Fig. 3a, the field lens 319 is a plano-convex lens. The imaging optics 301 further includes a meniscus lens 452, a plano-convex lens 453 and a doublet 454 (in this order when following a beam downstream from the UV radiation emitting plane 451). The doublet 454 can serve to achieve the correction for both chromatic and spherical aberration. In other examples, the imaging optics can include one or more aspherical lens elements.

In the example of Fig. 4, the aperture stop 313 is located at a focal point of the field lens 319 and a focal point of a first group of the plurality of lens elements 452, 453, 454. This can render the imaging optics 301 telecentric at its input and its output.

In some examples, the system for synthesizing a macromolecule from a sample includes a photodetector 499 (e.g., one or more photodiodes )

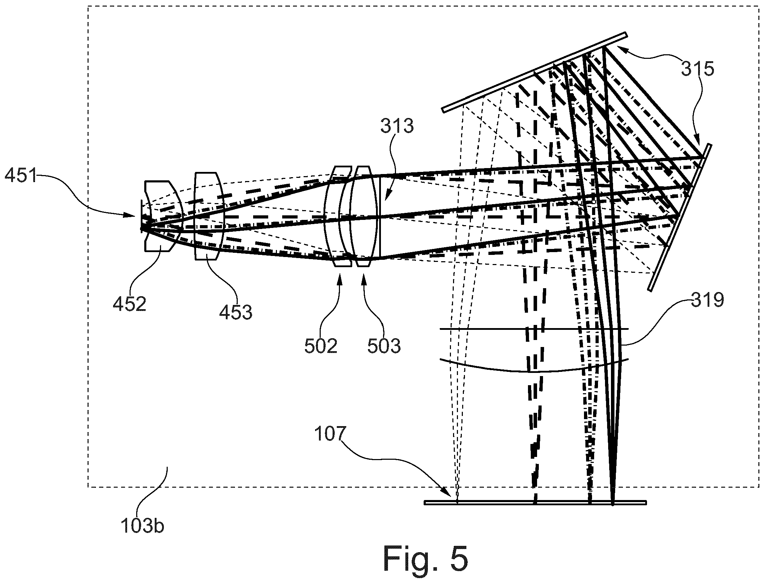

Fig. 5 illustrates a beam propagation of UV radiation in another example illumination optics assembly 103b according to the present disclosure. The illumination optics assembly 103b is similar to the illumination optics assembly 103a of Fig. 4. However, instead of the doublet 454 of Fig. 4, the imaging opticsof Fig. 5 includes a set of two separate lens elements 502, 503. The set of two separate lens elements 502, 503 can serve to achieve the correction for spherical aberration but not chromatic aberration. This can mean that the lens elements can be made from a single material in such examples, which can reduce the costs for the lens elements. While it generally can be desirable to correct for chromatic aberration, some UV radiation sources (e.g., UV LEDs) can have a sufficiently small bandwidth so that having no chromatic aberration corrected can be tolerated.

The remaining components are configured as shown in Fig. 4.

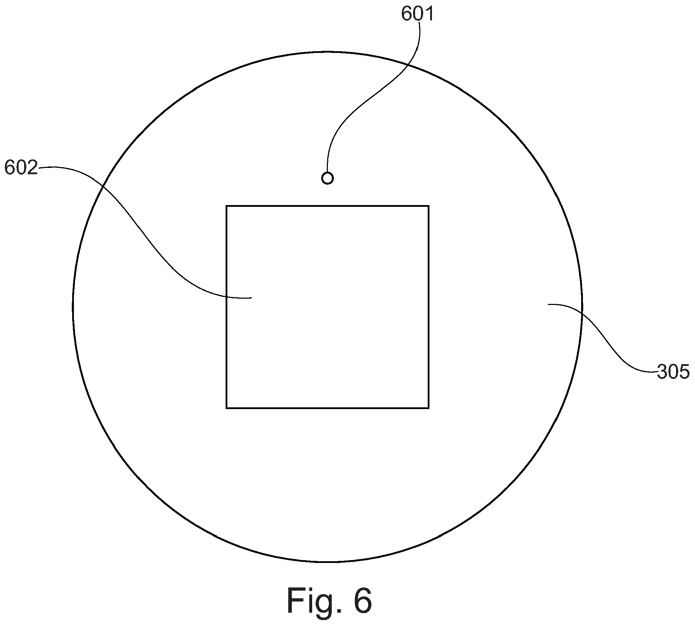

Fig. 6 shows an example field stop 305 including an opening 601 for a reference channel in addition to an opening for defining the illumination field 602 according to the present disclosure. An exit (e.g., exit facet) of the mixing component 307 covers both openings of the field stop 305 in these examples.

In some examples, the illumination optics assembly further defines a reference channel of UV radiation having an illumination intensity having a defined relationship to the illumination intensity on the receptacle (e.g., can be proportional). In some examples, the reference channel describes a second path of UV light which does not hit the sample, but a photodiode.

In some examples, the system for synthesizing a macromolecule from a sample is further configured to measure the UV radiation in the reference channel to control the operation of the UV radiation source. For instance, an illumination intensity of the UV radiation source can be increased or reduced based on an illumination intensity in the reference channel (e.g., by increasing a current and/or voltage provided to the UV radiation source). The control of the operation of the UV radiation source can happen in closed loop including measuring the UV radiation in the reference channel. In other examples or in addition, the change of the intensity of the UV radiation source can happen periodically and/or event based. This can help to counteract the effects of aging of components of the system (e.g., aging of the UV radiation source).

In addition or alternatively, the reference channel can be used during setup or maintenance of a system. This might mean that no closed-loop control is required. In this manner,

For instance, a field stop 305 as described herein (e.g., arranged over an output of the mixing component) can include an opening 601. The opening can branch off a fraction of the UV radiation at the field stop. The branched off fraction of the UV radiation can be detected at a detector (e.g., a photodetector - not shown in Fig. 6). The branched off fraction of the UV radiation can traverse through at least a portion of the illumination optics assembly. In some examples, the system for synthesizing a macromolecule includes a photodetector (e.g., one or more photo diodes) to collect UV radiation in the reference channer. For example, a photodetector 499 for a reference channel is shown in Fig. 4 (e.g., in a position proximate to field lens 319). In this example, the UV radiation passes the mixing component, passes the opening 601 in the field stop 305, passes the lens elements 452, 453, 454 and the folding mirrors 315. However, the UV radiation does not pass the field lens 319.

Returning to Fig. 1, the system for synthesizing a macromolecule 100 from a sample according to the present disclosure can include one or more of the following additional components in some examples.

Fig. 7b is an example flow cell 107 of the present disclosure. In some examples, the system 100 includes a flow cell 107 including at least one flow channel 151 (i.e., the receptacle is a flow cell). Each flow channel 151 can have a functionalized solid phase surface configured to bind a plurality of capture probes that are configured to bind the sample. The capture probes are configured to hybridize to a target nucleotide sequence (contained in the sample). In some examples, the functionalized solid phase surface is formed from a modification or treatment of the flow channel substrate and is not formed from a separate coating of the flow channel surface. In other examples, the functionalized solid phase surface is formed from a separate coating of the flow channel surface. Other receptacles described herein can also include the capture probes and functionalized solid phase surface described above.

The flow cell 107 may have at least two flow channels 151 or at least four flow channels. In other examples, the flow cell has only one flow channel. In some examples, the flow channel 151 may be serpentine.

Each receptacle 107 or parts thereof (e.g. each flow channel of a flow cell) can have an inlet port and an outlet port. In some examples, the inlet port or parts thereof (e.g. a flow channel of a flow cell) is in fluidic communication with a sipper. The sipper is arranged so that or more reagents, buffers, wash solution, and sample can be drawn into the receptacle 107 (e.g., the flow cell). For instance, a pump (not shown in **Fig. 1****)** can be arranged to draw the respective fluid into the receptacle 107 (e.g., the flow cell). In addition or alternatively, the sipper can also be used to transport the synthesized macromolecules from the receptacle 107 (e.g., the flow cell) into a collection vessel (e.g., a tube or another appropriate vessel). The collection vessel can then be provided to a further module of a system for nucleotide sequencing (as shown, e.g., in **Fig. 2****).** Other outlet ports can be provided than a sipper for drawing fluids into and out of the receptacle 107 in other examples.

In some examples, the mount 125 for the receptacle (e.g., the flow cell) includes a thermal block 113. The thermal block 113 can be thermally coupled to the mount 125 and can be configured to control the temperature of the receptacle 107 (e.g., the flow cell). The thermal block 113 can be configured to be cooled or heated as desired so that the reactions in the receptacle 107 can be performed at varying temperatures (e.g., between 5° Celsius and 90° Celsius, or between 20° Celsius and 60° Celsius).

In some examples, the system further includes a holder 109 configured to hold a plurality of reagents and/or at least one sample. In other examples, different holders can be provided for the plurality of reagents and the at least one sample. In some examples, the holder 109 can be configured to hold a multi-well plate. In addition or alternatively, the holder can be configured to hold a rack of vials or tubes. The reagents and/or at least one sample in the holder can be drawn into the receptacle (e.g., through an inlet port). Additionally or alternatively, synthesized macromolecules in a liquid phase can be transported out of the receptacle into the holder.

In some examples, the system further includes a gantry 111 configured to move in two or more orthogonal axes (e.g., three different orthogonal axes). The gantry 111 can be configured to move the holder 109 configured to hold a plurality of reagents and/or at least one sample (e.g., one of the holders discussed above).

In some examples, the system 100 can include a pump in fluid communication with an inlet port and/or an outlet port of the receptacle 107 or a part thereof (e.g., a flow channel). The pump can be arranged to draw liquid out of the receptacle and/or into the receptacle (e.g., the flow channel) as described above. The system can include a valve 121 configured to selectively connect an outlet port of the receptacle (e.g., the flow channel) with a waste reservoir 119 and a buffer reservoir 117. Multiple pumps can also be provided for this task in other examples.

The controller 105 can be further configured to control the one or more pumps, the gantry 111, and the thermal block 113 (or a sub-selection of these components depending on the layout of the system 100) to synthesize a macromolecule from a sample (further aspects of this process are described below).

**Fig. 7a** illustrates the synthesizing steps of an example of a method of synthesizing macromolecules according to the present disclosure.

The present disclosure also relates to a method for synthesizing a macromolecule from a sample. The method comprises providing UV radiation 709 to a macromolecule bound to a surface of a receptacle to cleave the macromolecule from the receptacle (e.g. flow cell). The UV light is provided using an illumination optics assembly configured to guide the UV radiation from a UV radiation source to the receptacle in a process of synthesizing the macromolecule from a sample.

The method can include one or more of the additional steps discussed in the following sections in some examples.

The method can include functionalizing a receptacle 701 (e.g., the surface of a receptacle). For instance, a selected molecule 702 (also referred to as capture probe in the present disclosure) can be bound to the surface of the receptacle (e.g., a surface of a flow channel of a flow cell). In some examples, when carrying out the techniques of the present disclosure, a surface of the receptacle has already been functionalized (i.e., the process starts with a receptacle having a functionalized surface). The selected molecule or capture probe 702 can be bound to the surface of the receptacle by a linker molecule 703 which itself is attached to the surface of the receptacle (e.g., in a solid phase). The selected molecule or capture probe 702 is designed to capture (bind with) a strand of nucleotides in the sample. Even though Fig. 7a only shows a single selected molecule or capture probe 702, the functionalization of the receptacle 701 can include a plurality of selected molecules or capture probes 702 attached to the surface of the receptacle.

In a further step 705, a target nucleotide 706 can be provided to the receptacle. The target nucleotide 706 is captured by (e.g., bound to) the selected molecule or capture probe 702. For instance, the selected molecule or capture probe 702 can include a sequence of nucleotides that can bind to a complementary sequence of nucleotides of the target nucleotide 706 (e.g., by hybridization). In this manner, the target nucleotide 706 can be bound to the receptacle (e.g., its surface) for the synthesization of a macromolecule described in the present disclosure.

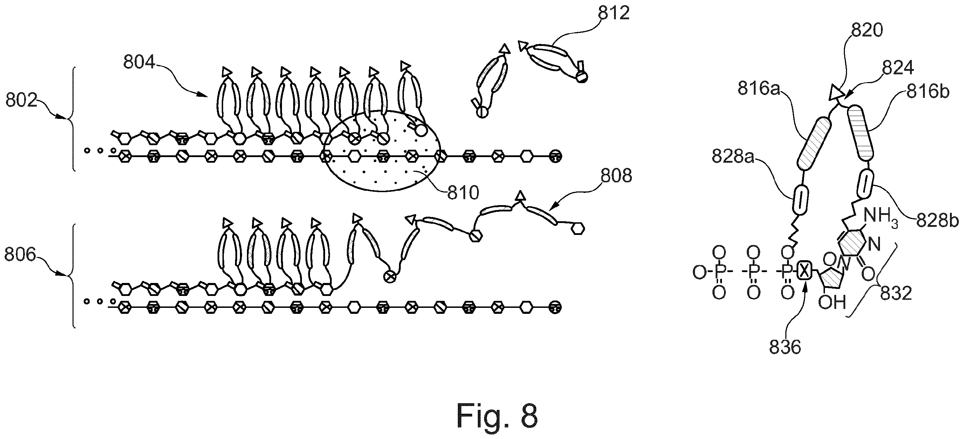

In a further step 707, a macromolecule 708 is synthesized as described in the present disclosure. For instance, the macromolecule 708 can be an Xpandomer as described in the present disclosure or the cited references (particularly in the following section and in connection with **Fig. 8****).** The macromolecule 708 can encode a nucleotide sequence of the target nucleotide 706. In a further step 709, UV radiation is delivered to cleave (release) the macromolecule from the receptacle (e.g., the surface of the receptacle). This can include employing the systems or methods of the present disclosure.

In a further step, the cleaved (released) macromolecules can be provided to a sequencing system for determining the nucleotide sequence of the target nucleotide sequence 706 by examining the synthesized macromolecule 708 (not shown in **Fig. 7a****).** For instance, a liquid phase including the cleaved (released) macromolecules can be removed from the receptacle (and, e.g., from the system for synthesizing a macromolecule from a sample) by a transport mechanism. For example, a pump and/or a sipper can be used to remove the liquid phase including the cleaved (released) macromolecules can be removed from the receptacle 107. Further aspects of this step are also discussed below.

### Further aspects of sequencing by expansion

The techniques of the present invention may be applied to sequencing by expansion (SBX) using pores (e.g., nanopores) as explained subsequently (i.e., the systems for synthesizing a macromolecule from a sample of the present disclosure can be configured to carry out one or more of the steps and/or employ the macromolecules discussed below; likewise, the methods for synthesizing a macromolecule from a sample of the present disclosure can be include one or more of the steps and/or employ the macromolecules discussed below). In some examples, the at least one system for nucleotide sequencing 400 (as shown in **Fig. 2****)** is configured to carry out sequencing by expansion (SBX) using nanopores as explained subsequently.

Sequencing by expansion is described in WO 2020/236526 A1, "Translocation control elements, reporter codes, and further means for translocation control for use in nanopore sequencing," filed May 14, 2020, and US 7,939,259 B2, "High throughput nucleic acid sequencing by expansion," filed June 19, 2008, the entire contents of both of which are incorporated herein by reference for all purposes.

Sequencing by expansion protocol is based on the polymerization of (highly modified) non-natural nucleotide analogs referred to as "XNTPs" (i.e., the synthesized surrogate macromolecule is a polymer in these examples). In general terms, SBX uses biochemical polymerization to transcribe the sequence of a DNA template onto a measurable polymer (called an "Xpandomer"). The transcribed sequence is encoded along the Xpandomer backbone in reporters that are separated by a predetermined distance (e.g., between 7 nm and 15 nm, further optionally approximately 10 nm). The reporters can be designed for high-signal-to-noise, well-differentiated responses. These differences can provide significant performance enhancements in sequence read efficiency and accuracy of Xpandomers relative to natural DNA (or RNA).

### Surrogate macromolecule structure

Fig. 8 shows components of surrogate polymers (which are synthesized macromolecules, e.g., Xpandomers). Xpandomers include a sequence of ordered XNTPs which correspond to the order of the target DNA sequence. FIG. 8 is not to scale. XNTPs can be expandable, 5' triphosphate modified non-natural nucleotide analogs compatible with template dependent enzymatic polymerization. An XNTP can have two distinct functional regions; namely, a selectively cleavable phosphoramidate bond, linking the 5' α-phosphate to the nucleobase, and a symmetrically synthesized reporter tether (SSRT) that is attached within the nucleoside triphosphoramidate at positions that allow for controlled expansion by cleavage of the phosphoramidate bond. The SSRT cam include linkers and separated by the selectively cleavable phosphoramidate bond. Each linker attaches to one end of a reporter code.

Section 802 shows primer-directed Xpandomer synthesis. XNTP 804 is illustrated in the "constrained configuration", characteristic of the XNTP substrates and the daughter strand products of template-dependent polymerization. The constrained configuration of polymerized XNTPs is the precursor to the expanded configuration (XNTP 808), as found in Xpandomer products. Section 806 illustrates cleaving to expand the Xpandomer. The transition from the constrained configuration to the expanded configuration occurs upon scission of the P--N bond of the phosphoramidate within the primary backbone of the daughter strand.

During assembly, the monomeric XNTP substrates (XATP, XCTP, XGTP and XTTP) are polymerized on the extendable terminus of a nascent daughter strand by a process of template-directed polymerization using single-stranded template as a guide. Generally, this process is initiated from a primer and proceeds in the 5' to 3' direction. Generally, a DNA polymerase 810 or other polymerase is used to form the daughter strand, and conditions are selected so that a complimentary copy of the template strand is obtained. After the daughter strand is synthesized, the coupled SSRTs form the constrained Xpandomer that further forms the daughter strand. SSRTs in the daughter strand have the "constrained configuration" of the XNTP substrates. The constrained configuration of the SSRT is the precursor to the expanded configuration, as found the Xpandomer product.

In this example, once synthesis and expansion are complete, each monomeric XNTP unit 812 in the Xpandomer contains two reporter codes 816a and 816b with a Reporter Code "level" corresponding to the base type it encodes, and a Translocation Control Element (TCE) 820. The TCE controls the rate of Xpandomer translocation through a nanopore through a combination of sterics, electrorepulsion, and/or preferential interaction with the nanopore. The resistance of the TCE to the driving force of the ion current when positioned at the pore aperture and the consequent increase in applied voltage (i.e., the voltage pulse) necessary to overcome the arrest and resume translocation, can be customized by modulating various properties of the TCE, (and in some embodiments, the reporter codes and other elements of the SSRT) e.g., the bulk, length, and/or charge density.

Brancher 824 is the branched structure that terminates the TCE and links to reporter codes 816a and 816b. Enhancers 828a and 828b may aid in polymerase incorporation. Nucleotide 832 is attached to enhancer 828b and may include a cleavable linker 836. Cleavable linker 836 may be a photocleavable linker. Cleavable linker 836 may be cleaved to result in the expansion shown in section 806.

The Xpandomer as shown in Fig. 8 can be synthesized while bound to the surface of a receptacle (e.g., a flow channel of a flow cell) as discussed before and particularly in connection with Fig. 7. After the synthesis is complete, the Xpandomer can be cleaved and therefore released from the receptacle (e.g., a flow channel of a flow cell) by UV radiation employing the systems or methods of the present disclosure.

### Further aspects of system for sequencing by expansion

Returning to **Fig. 2****,** the at least one sequencing module 300 can include one or more of the following components in some examples.

In some examples, the at least one sequencing module 300 includes a sample holder 901. The sample holder 901 can be configured to hold a sample including synthesized macromolecules (e.g., Xpandomers). For instance, the sample including synthesized macromolecules (e.g., Xpandomers) can be prepared in a system for synthesizing a macromolecule from a sample 100 as described in the present disclosure. In some examples, the sample holder 901 can be a multi-well plate.

The sample holder 901 can be configured to contact the sample with an assay device 902. The assay device 902 can be configured to provide a signal of a physical characteristic e.g., a voltage, a current, or other electrical characteristic) of the sample (i.e., a synthesized macromolecule contained therein). In some examples, the assay device 902 can include a device for sequencing using pores (e.g., a membrane including nanopores). The physical characteristic (e.g., a voltage, a current, or other electrical characteristic) of the sample can be detected by detector 903. Detector 903 can take a measurement at intervals (e.g., periodic intervals) to obtain data points that make up a data signal. In one embodiment, an analog-to-digital converter converts an analog signal from the detector 903 into digital form at a plurality of times. Detector 903 may be a voltage or current measurement device. Sample holder 901 and detector 903 can form the assay device 902. A data signal is sent from detector 903 to a computing unit 906. Data signal may be stored in a local memory, an external memory, or a storage device.

The computing unit 906 can be part of the controller of the system for nucleotide sequencing 400. The computing unit 906 and the other components may be part of a stand-alone or network connected computer system, or they may be directly attached to or incorporated in a device (e.g., the at least one sequencing module 300) that includes detector 903 and/or sample holder 901.

### Further aspects of computer implementation

Any of the controllers, control units, computing units and computer systems (in short "computer system" in the following section) mentioned herein may be embodied in any suitable form and/or may utilize any suitable number of subsystems. In some examples, a computer system includes a single computer apparatus, where the subsystems can be the components of the computer apparatus. In other examples, a computer system can include multiple computer apparatuses, each being a subsystem, with internal components. A computer system can include desktop and laptop computers, tablets, mobile phones, other mobile devices, and cloud-based systems.

A computer system can include a plurality of the same components or subsystems, e.g., connected together by external interface, by an internal interface, or via removable storage devices that can be connected and removed from one component to another component. In some embodiments, computer systems, subsystem, or apparatuses can communicate over a network. In such instances, one computer can be considered a client and another computer a server, where each can be part of a same computer system. A client and a server can each include multiple systems, subsystems, or components.

Aspects can be implemented in the form of control logic using hardware circuitry (e.g., an application specific integrated circuit or field programmable gate array) and/or using computer software with a generally programmable processor in a modular or integrated manner. As used herein, a processor can include a single-core processor, multi-core processor on a same integrated chip, or multiple processing units on a single circuit board or networked, as well as dedicated hardware. Based on the disclosure and teachings provided herein, a person of ordinary skill in the art will know and appreciate other ways and/or methods to implement embodiments of the present invention using hardware and a combination of hardware and software.

Any of the software components or functions described in this application may be implemented as software code to be executed by a processor using any suitable computer language such as, for example, Java, C, C++, C#, Objective-C, Swift, or scripting language such as Perl or Python using, for example, conventional or object-oriented techniques. The software code may be stored as a series of instructions or commands on a computer readable medium for storage and/or transmission. A suitable non-transitory computer readable medium can include random access memory (RAM), a read only memory (ROM), a magnetic medium such as a hard-drive or a floppy disk, or an optical medium such as a compact disk (CD) or DVD (digital versatile disk) or Blu-ray disk, flash memory, and the like. The computer readable medium may be any combination of such storage or transmission devices.

Such programs may also be encoded and transmitted using carrier signals adapted for transmission via wired, optical, and/or wireless networks conforming to a variety of protocols, including the Internet. As such, a computer readable medium may be created using a data signal encoded with such programs. Computer readable media encoded with the program code may be packaged with a compatible device or provided separately from other devices (e.g., via Internet download). Any such computer readable medium may reside on or within a single computer product (e.g., a hard drive, a CD, or an entire computer system), and may be present on or within different computer products within a system or network. A computer system may include a monitor, printer, or other suitable display for providing any of the results mentioned herein to a user.

Any of the methods described herein may be totally or partially performed with a computer system including one or more processors, which can be configured to perform the steps. Thus, embodiments can be directed to computer systems configured to perform the steps of any of the methods described herein, potentially with different components performing a respective step or a respective group of steps. Although presented as numbered steps, steps of methods herein can be performed at a same time or at different times or in a different order. Additionally, portions of these steps may be used with portions of other steps from other methods. Also, all or portions of a step may be optional. Additionally, any of the steps of any of the methods can be performed with modules, units, circuits, or other means of a system for performing these steps.

The specific details of particular examples may be combined in any suitable manner without departing from the spirit and scope of examples of the invention. However, other examples of the invention may be directed to specific embodiments relating to each individual aspect, or specific combinations of these individual aspects.

The above description of example s of the present disclosure has been presented for the purposes of illustration and description. It is not intended to be exhaustive or to limit the disclosure to the precise form described, and many modifications and variations are possible in light of the teaching above.

A recitation of "a", "an", or "the" is intended to mean "one or more" unless specifically indicated to the contrary. The use of "or" is intended to mean an "inclusive or," and not an "exclusive or" unless specifically indicated to the contrary. Reference to a "first" component does not necessarily require that a second component be provided. Moreover, reference to a "first" or a "second" component does not limit the referenced component to a particular location unless expressly stated. The term "based on" is intended to mean "based at least in part on."

## Claims

1. A system for synthesizing a macromolecule from a sample (100), the system comprising:
a mount (125) configured to receive at least one receptacle (107) configured to receive a sample;
a UV radiation source (325) configured to emit UV radiation;
an illumination optics assembly (103; 103a; 103b) configured to guide the UV radiation to the receptacle (107); and
a controller (105) configured to control the operation of the UV radiation source (325) to cleave macromolecules (708) in the at least one receptacle (107) in a process of synthesizing the macromolecule from a sample.

2. The system of claim 1, wherein the illumination optics assembly (103; 103a; 103b) comprises:
a mixing component (307) configured to mix the emitted UV radiation; and
imaging optics (301) configured to image an output of the mixing component (307) onto the at least one receptacle (107).

3. The system of claim 2, wherein the output of the mixing component (307) is configured to serve as a secondary light source imaged onto the at least one receptacle (107) by the imaging optics (301).

4. The system of claim 2 or claim 3, wherein the mixing component is a mixing rod.

5. The system of one of claims 2 to 4, wherein the illumination optics assembly (103; 103a; 103b) further comprises:
a field stop (305) arranged between the mixing component (307) and the imaging optics (301),
wherein the field stop (305) is shaped to define a field of the UV radiation entering the imaging optics (301).

6. The system of claim 5, wherein the field stop (305) is arranged over an output of the mixing component (307).

7. The system of claim 6, wherein the field stop (305) is arranged less than 3 mm away from the output of the mixing component (307) and/or spaced apart from the output of the mixing components (307).

8. The system of one of claims 1 to 7, wherein the illumination optics assembly (103; 103a; 103b) further comprises:
an aperture stop (313) arranged between the imaging optics and the mount.

9. The system of one of claims 1 to 8, wherein the illumination optics assembly (103; 103a; 103b) includes a plurality of transmissive optical components (319; 452; 453; 454; 502; 503).

10. The system of one of claims 1 to 9, wherein the illumination optics assembly (103; 103a; 103b) further comprises one or more folding mirrors (314) to fold a beam path of the UV radiation one or more times.

11. The system of one of claims 1 to 10, wherein the illumination optics assembly (103; 103a; 103b) is configured to be telecentric at its input and/or its output.

12. The system of one of claims 1 to 11, wherein the illumination optics assembly (103; 103a; 103b) further defines a reference channel of UV radiation having an illumination intensity having a defined relationship to the illumination intensity on the at least one receptacle (107), wherein the system for synthesizing a macromolecule from a sample (100) is further configured to measure the UV radiation in the reference channel to control the operation of the UV radiation source (325).

13. The system of one of claims 1 to 12, wherein the receptacle is a flow cell (107) including one or more flow channels (151), wherein each flow channel (151) has a functionalized solid phase surface configured to bind a plurality of capture probes that are configured to bind the macromolecules (708).

14. The system of one of claims 1 to 13, further comprising:
at least one sequencing module (300) configured to determine a nucleotide sequence in the sample based on the synthesized macromolecules (708).

15. A method for synthesizing a macromolecule from a sample,
providing (709) UV radiation to a macromolecule (708) bound to a surface of a receptacle (107) to cleave the macromolecule from the receptacle (107),
wherein the UV light is provided using an illumination optics assembly (103; 103a; 103b) configured to guide the UV radiation from a UV radiation source (325) to the receptacle (107) in a process of synthesizing the macromolecule (708) from a sample.
